Europäisches Patentamt

European Patent Office

Office européen des brevets

(11) Publication number: **0 149 181**
**B1**

# (12) EUROPEAN PATENT SPECIFICATION

(45) Date of publication of patent specification: **07.09.88**

(51) Int. Cl.⁴: **G 21 C 7/10**

(21) Application number: **84115805.8**

(22) Date of filing: **19.12.84**

(54) **Coolant-displacement rod for a nuclear reactor.**

(30) Priority: **13.01.84 US 570551**

(43) Date of publication of application:
**24.07.85 Bulletin 85/30**

(45) Publication of the grant of the patent:
**07.09.88 Bulletin 88/36**

(84) Designated Contracting States:
**BE DE FR GB IT SE**

(56) References cited:
**EP-A-0 054 237**
**EP-A-0 054 238**
**FR-A-1 244 632**
**GB-A-1 168 371**

(73) Proprietor: **WESTINGHOUSE ELECTRIC CORPORATION**
**Westinghouse Building Gateway Center**
**Pittsburgh Pennsylvania 15222 (US)**

(72) Inventor: **Gjertsen, Robert Kenneth**
**126 Penn Lear Drive**
**Monroeville Pennsylvania 15146 (US)**
Inventor: **Wilson, John Francis**
**3560 Meadowgate Drive**
**Murrysville, Pennsylvania 15668 (US)**

(74) Representative: **Patentanwälte Dipl.-Ing. R. Holzer Dipl.-Ing. (FH) W. Gallo**
**Philippine-Welser-Strasse 14**
**D-8900 Augsburg (DE)**

Courier Press, Leamington Spa, England.

## Description

This invention relates to nuclear reactors particularly coolant-displacement rods. Coolant-displacement rods are immersed in the coolant of a nuclear reactor when the nuclear reactor plant is started up and at the beginning of each refueling cycle (typically 18 months). They reduce the moderation of the neutron flux which would be produced by the coolant by displacing the coolant. After the reactor has been in operation for some time (typically 10 months of each cycle), these coolant-displacement rods are withdrawn from the coolant. A coolant-displacement rod includes zirconium-oxide pellets enclosed in cladding of a zirconium alloy.

In the interest of dealing in concrete concepts, this invention is described in detail herein as applied to coolant-displacement rods. Coolant-displacement rods are used predominantly in nuclear reactors of the pressurized-water type. This invention is not confined to pressurized-water reactors and to the extent that it or its principles are embodied in reactors of other types, such embodiment is within the scope of equivalents thereof.

It has been found that when a coolant-displacement rod is exposed to high energy neutron-flux, the cladding of zirconium alloy grows axially while the zirconium oxide remains dimensionally stable. This growth of the cladding is permanent and progressive. The cladding does not retract axially, as happens for thermal expansion, when the rod is removed from the flux environment and the growth increases as the exposure to the flux progresses. The life of a reactor is about 40 years. Over this time interval, an unsupported gap of as much as 17 cm. may be developed in the pellet stack usually at the upper end of the rod. At the temperature, pressure and flux of the coolant in the reactor, cladding at the unsupported gap would collapse. Distortion of collapsed cladding would cause jamming of a rod in its guide tube or thimble, not only restricting the axial movement of the rod with the collapsed cladding, but also restricting the movement of the whole associated coolant-displacement-rod assembly. Typically there are 24 rods in an assembly. Restriction of the movement of these rods would materially deteriorate the operation of the reactor.

It is the principal object of this invention to prevent the formation, in a coolant-displacement rod of a nuclear reactor, of an excessively long unsupported gap, which might collapse in the environment of the coolant of the reactor, as a result of the growth of the cladding when exposed to neutron flux and to provide such a rod in which the length of any unsupported gaps formed shall be minimized.

With this object in view, the present invention resides in a coolant-displacement rod for a pressurized water nuclear reactor, said coolant-displacement rod including a stack of pellets composed of zirconium oxide and enclosed within a cladding composed of an alloy predominantly of zirconium which cladding expands upon extended exposure to neutron flux, characterized in that said stack of pellets is divided into substacks with one certain of the pellets in each substack of pellets having an annular recess formed therein and the other pellets in each sub-stack of pellets being straight cylindrical cladding supporting pellets, so that said cladding is forced, under the pressure of the water in the reactor into firm engagement with said certain pellets and, when axially expanded on exposure to neutron flux, carries along said certain pellets together with the respective cladding supporting said pellets in said substacks.

Preferably, the pellets are composed of zirconium oxide and the cladding of a zirconium alloy. Typically, the pellets are cylindrical and the certain pellets have an "hourglass" profile. When an element in accordance with this invention is placed in-core; i.e., is immersed in the coolant of the reactor, the combination of external pressure on the surface of the cladding, temperature and higher-energy flux causes the zirconium cladding to creep down over the outside surface of the pellets of reduced transverse cross-sectional area. The stack of pellets in the element is compartmentalized into a plurality of spans or sub-stacks, each bounded by subdividing pellets of reduced transverse cross-sectional area. The accumulation into one-long gap of the gaps from sub-stack to sub-stack or compartment to compartment or span to span is prevented because the subdividing pellets defining the sub-stack are rendered immovable with respect to the cladding of the part of the cladding which encircles them.

The invention will become more readily apparent from the following description of a preferred embodiment thereof shown, by way of example only, in the accompanying drawings, in which:

Figure 1 is a view in side elevation, partly in section, showing a coolant-displacement rod in accordance with this invention;

Figure 2 is a view in transverse section taken along line II—II of Figure 1;

Figure 2A is a view in transverse section taken along line IIA—IIA of Figure 1;

Figure 3 is a view in side elevation, partly in section, showing a standard pellet of the rod shown in Figure 1; and

Figure 4 is a view in side elevation of a compartmentalizing pellet of the rod shown in Figure 1.

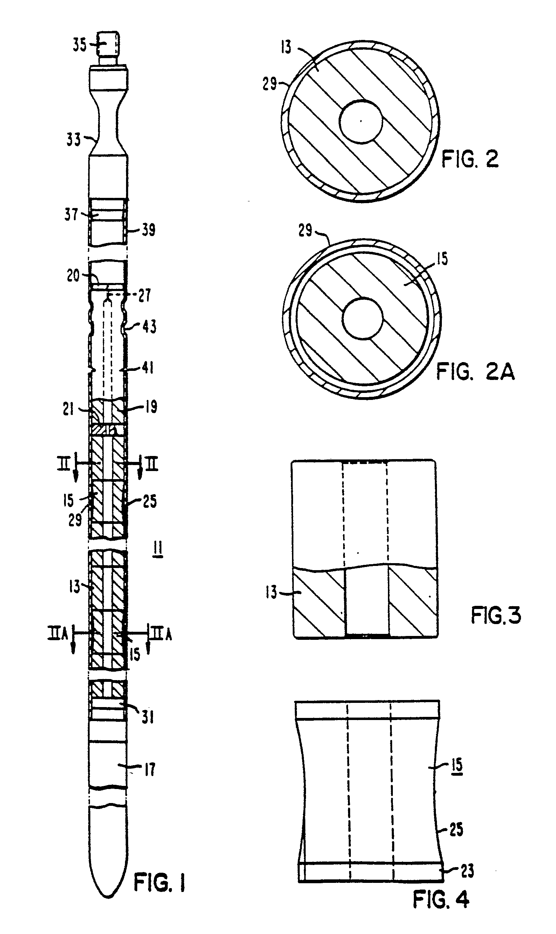

Figures 1, 3 and 4 include typical dimensions of a coolant-displacement rod in accordance with this invention for a pressurized-water reactor. These dimensions are included, not for the purpose of restricting the scope of this invention in any way, but to assist those skilled in the art in the practice of this invention.

The drawings show a coolant-displacement rod 11. The rod 11 includes a stack of pellets 13 and 15 interposed between a tapered end plug 17 and a mid plug 19. The mid plug 19 terminates in a chamfer 20 at its inner end. The rod 11 is immersed in the coolant with the end plug 17 downwardly. The expression "outer end" means the end towards the end plug 17, "inner end" means the end away from this end plug.

2

A spacer 21 is interposed between innermost pellet 13 of the stack and the mid plug 19. The pellets 13 (Figure 3) are standard pellets. They are of hollow circularly cylindrical form. The pellets 15 are compartmentalizing pellets. These pellets 15 (Figure 4) have the profile of a hollow "hourglass" terminating at each end in thin disc-like cylinders 23 joined by a slightly depressed surface 25 which in longitudinal cross-section has the form of circular arcs. The radius of the arcs is high compared to the length of the pellet so that the diameter of the waist differs by only a small magnitude from the diameter of the ends 23.

The end plug 17 is solid. The mid plug 19 is in the form of a hollow circular cylinder terminating at its inner end in a central hole 27 of small diameter.

The pellets are enclosed in cladding 29 which extends from a stem 31 at the inner end of the end plug 17 to a position along the mid plug 19. The end plug 17, the mid plug 19, the spacer 21 and the cladding 29 are composed of an alloy whose composition is predominantly zirconium. A typical such alloy is Zircaloy-4 which has the typical composition presented in the following table.

| Element | Wt.% min. | Wt.%, min. |
|---|---|---|
| Tin | 1.20 | 1.70 |
| Iron | 0.18 | 0.24 |
| Chromium | 0.07 | 0.13 |
| Iron+chromium | 0.28 | |
| Oxygen | 0.09 | 0.16 |
| Zirconium | Balance | |

Element, ppm maximum

| Aluminum | 75 | Copper | 50 | Nitrogen | 80 |
|---|---|---|---|---|---|
| Boron | 0.5 | Hafnium | 100 | Silicon | 120 |
| Cadmium | 0.5 | Hydrogen | 25 | Titanium | 50 |
| Carbon | 270 | Lead | 130 | Tungsten | 100 |
| Chlorine | 20 | Manganese | 50 | Uranium, total | 3.5 |
| Cobalt | 20 | Nickel | 70 | Uranium-235 | 0.025 |

The elements in the block in the lower part of the table are impurities.

At its outer end, the cladding 29 is welded pressure tight to the shoulder of the end plug 17 formed by the stem 31. At its innter end, the cladding is welded pressure tight to the surface of the mid plug 19. When the welding is completed, the air is exhausted through hole 27 from the space enclosed by the cladding and the space is back-filled with an inert gas such as helium at about atmospheric pressure. The hole 27 is sealed pressure tight by a weld. Reaction of components of air such as oxygen and water vapor with the Zircaloy alloy is thus precluded.

At the end opposite the end 17 the rod 11 includes a plug extension 33 terminating in a threaded tip 35. The tip 35 serves to connect the rod 11 to the rod drive (not shown). The rod extension 33 has a stem 37 defining a shoulder. A tube 39 extends between this shoulder, to which it is welded, and the mid plug 19 and abuts the weld 41 between the cladding 29 and the mid plug 19. The tube 39 is secured to the mid plug 19 by circular swaged joints 43. The plug extension 33 and the tube 39 are composed of stainless steel. The tube 39 is vented.

The rod 11 is immersed in the coolant with the tapered end 17 downwardly. The taper facilitates the entry of the rod into the thimble which receives the rod. The whole rod including the tube 39 is bathed by the coolant. Since the tube 39 is vented, the coolant penetrates into the tube and there is no differential in pressure across the tube wall. Typically, the pressure of the coolant is about 158 kg/cm². The temperature of the coolant while the reactor is in operation is about 315°C. There is substantial pressure against the cladding 29. The thermal expansion of the pellets 13 and 15, the cladding 29 and the tube 39 is reversible. The axial expansion of the cladding which results from the neutron flux is permanent. As the cladding 29 expands, it is urged by the hoop stress exerted by the coolant into engagement with the depressions 25 in the pellets 15 compartmentalizing the pellets in the stack into sub-stacks each bounded by a pair of pellets 15.

In the rod 11 shown in the drawings, every tenth pellet is a compartmentalizing pellet 15. Since each pellet is 2.5 cm. in length, the length of a compartmentalized sub-stack is 25 cm. The length of the pellet stack of the typical rod shown in the drawings is 360 cm.±6.5 mm., less the length of the spacer which is about 6.3 mm. Over an interval of 40 years, the axial expansion of the cladding 29 would, in the absence of the compartmentalized sub-stacks, result in an unsupported gap of about 17 cm. The gap resulting for each sub-stack in a compartmentalized stack would then be:

$$\frac{25}{360} \times 17 \text{ cm.}$$

or

$$1.21 \text{ cm.}$$

Computations on buckling of the cladding over one unsupported gap, based on this rod 11 with typical dimensions as shown in the drawings, establish that buckling of cladding will not occur under the coolant pressure and at the temperature of a PWR nuclear reactor for a gap of 1.25 cm. or less. For rods of other dimensions; e.g., cladding of different thicknesses or different materials, the interval between compartmentalizing pellets 15 may be set to accommodate the permissible length of the unsupported gaps.

**Claims**

1. A coolant-displacement rod for a pressurized water nuclear reactor, said coolant-displacement rod including a stack of pellets (13) composed of zirconium oxide and enclosed within a cladding (29) composed of an alloy predominantly of zirconium which cladding (29) expands upon extended exposure to neutron flux, characterized in that said stack of pellets is divided into substacks with one certain of the pellets (15) in each substack of pellets (13, 15) having an annular recess formed therein and the other pellets in each substack of pellets being straight cylindrical cladding supporting pellets, so that said cladding is forced, under the pressure of the water in the reactor into firm engagement with said certain pellets and, when axially expanded on exposure to neutron flux, carries along said certain pellets, together with the respective cladding supporting said pellets in said substacks.

2. A coolant-displacement rod as claimed in claim 1, characterized in that the cladding (29) consists of a zirconium alloy having substantially the following composition:

| Element | Wt.%, min. | Wt.%, max. |
|---|---|---|
| Tin | 1.20 | 1.70 |
| Iron | 0.18 | 0.24 |
| Chromium | 0.07 | 0.13 |
| Iron+chromium | 0.28 | |
| Oxygen | 0.09 | 0.16 |
| Zirconium | Balance | |

3. A coolant displacement rod according to claim 1 or 2, wherein each of the pellets (15) is generally symmetrical about its longitudinal axis characterized in that the intersecting line between the outer surface of said each pellet (15) and a plane including the pellet axis includes a circular arc extending from a point near one end of the pellet (15) to a point near the opposite end of the pellet.

4. A coolant displacement rod according to claim 3 characterized in that the radius of the arc has a length which is greater than the length of the pellet (13).

5. A coolant displacement rod according to claim 3 or 4, characterized in that each of the certain pellets (15) has an "hourglass" profile.

**Patentansprüche**

1. Kühlmittelverdrängerstab für einen Druckwasser-Kernreaktor, der einen von einer Hülle (29) aus einer hauptsächlich Zirkonium enthaltenden Legierung umschlossenen Stapel von Tabletten (13) aus Zirkoniumoxid aufweist, wobei die Hülle (29) sich unter anhaltender Neutronenflußeinwirkung ausdehnt, dadurch gekennzeichnet, daß der Tablettenstapel in Stapelabschnitte unterteilt ist, wobei jeweils eine bestimmte Tablette (15) in jedem Tablettstapelabschnitt (13, 15) eine darin gebildete Ringnut aufweist und die anderen Tabletten in jedem Stapelabschnitt geradzylindrische, die Hülle abstützende Tabletten sind, so daß die Hülle unter dem Wasserdruck im Reaktor in festen Eingriff mit den genannten bestimmten Tabletten gedrückt wird und bei axialer Ausdehnung unter Neutronenflußeinwirkung die genannten bestimmten Tabletten zusammen mit den betreffenden, die Hülle abstützenden Tabletten in den Stapelabschnitten mitnimmt.

2. Kühlmittelverdrängerstab nach Anspruch 1, dadurch gekennzeichnet, daß die Hülle (29) aus einer Zirkoniumlegierung mit im wesentlichen folgender Zusammensetzung besteht:

| Element | Gew.-%, Min. | Gew.-%, Max. |
|---|---|---|
| Zinn | 1,20 | 1,70 |
| Eisen | 0,18 | 0,24 |
| Chrom | 0,07 | 0,13 |
| Eisen+Chrom | 0,28 | |
| Sauerstoff | 0,09 | 0,16 |
| Zirkonium | Rest | |

3. Kühlmittelverdrängerstab nach Anspruch 1 oder 2, wobei jede Tablette (15) etwa symmetrisch mit Bezug auf ihre Längsachse ist, dadurch gekennzeichnet, daß die Schnittlinie der Außenfläche jeder Tablette (15) in einer die Tablettenachse enthaltenden Ebene einen Kreisbogen beschreibt, der von einem Punkt nahe eines Tablettenendes zu einem Punkt nahe des anderen Tablettenendes verläuft.

4. Kühlmittelverdrängerstab nach Anspruch 3, dadurch gekennzeichnet, daß der Radius des Kreisbogens größer als die Länge der Tablette (13) ist.

5. Kühlmittelverdrängerstab nach Anspruch 3 oder 4, dadurch gekennzeichnet, daß jede der bestimmen Tabletten (15) ein "Stundenglas"-Profil hat.

## Revendications

1. Barre de déplacement de liquide de refroidissement destinée à un réacteur nucléaire à eau pressurisée, ladite barre de déplacement de liquide de refroidissement comprenant un empilement de pastilles (13) composées d'un oxyde de zirconium et enfermées à l'intérieur d'un gainage (29) composé d'un alliage à prédominance de zirconium, gainage (29) qui se dilate sous l'effet d'une exposition prolongée aux flux de neutrons, caractérisée en ce que ledit empilement de pastilles est divisé en empilements élémentaires, une certaine desdites pastilles (15) dans chaque empilement élémentaire de pastilles (13, 15) comportant un évidement annulaire interne et les autres pastilles de chaque empilement élémentaire de pastilles étant des pastilles cylindriques droites supportant le gainage, de sorte que ledit gainage est forcé, sous l'effet de la pression de l'eau du réacteur, de venir en contact ferme avec lesdites certaines pastilles et que, quand il se dilate longitudinalement du fait de son exposition aux flux de neutrons, il entraîne longitudinalement avec lui lesdites certaines pastilles en même temps que lesdites pastilles supportant le gainage desdits empilements correspondants.

2. Barre de déplacement de liquide de refroidissement selon la revendication 1, caractérisée en ce que le gainage (29) consiste en un alliage de zirconium qui a essentiellement la composition suivante:

| Elément | % minimal en poids | % maximal en poids |
|---|---|---|
| Etain | 1,20 | 1,70 |
| Fer | 0,18 | 0,24 |
| Chrome | 0,07 | 0,13 |
| Fer+Chrome | 0,28 | |
| Oxygène | 0,09 | 0,16 |
| Zirconium | le reste | |

3. Barre de déplacement de liquide de refroidissement selon la revendication 1 ou la revendication 2, dans laquelle chacune des pastilles (15) est généralement symétrique par rapport à son axe longitudinal, caractérisée en ce que la ligne d'intersection entre la surface externe de chacune desdites pastilles (15) et un plan passant par l'axe de la pastille comprend un arc de cercle s'étendant depuis un point situé près d'une extrémité de la pastille (15) jusqu'à un point situé près de l'extrémité opposée de la pastille.

4. Barre de déplacement de liquide de refroidissement selon la revendication 3 caractérisée en ce que le rayon de l'arc a une longueur qui est supérieure à la longueur de la pastille (13).

5. Barre de déplacement de liquide de refroidissement selon la revendication 3 ou la revendication 4, caractérisée en ce que chacune desdites certaines pastilles (15) a un profil de "sablier".

FIG. 1

FIG. 2

FIG. 2A

FIG.3

FIG. 4